# EUROPÄISCHE PATENTSCHRIFT

(11) **EP 0 599 151 B1**
(45) Veröffentlichungstag und Bekanntmachung des Hinweises auf die Patenterteilung: **16.07.1997**
(21) Anmeldenummer: 93118317.2
(22) Anmeldetag: 12.11.1993
(51) Int. Cl.: A01F 25/20

(54) **Silageschneidzange**
Silage cutter
Désileuse à couteaux

(30) Priorität: 23.11.1992 DE 9215818 U
(43) Veröffentlichungstag der Anmeldung: 01.06.1994
(73) Patentinhaber: von der Heide, Hans, D-49479 Ibbenbüren (DE)
(72) Erfinder: von der Heide, Hans, D-49479 Ibbenbüren (DE)
(74) Vertreter: Schulze Horn, Stefan, Dipl.-Ing. M.Sc.

(56) Entgegenhaltungen:
- EP-A- 0 189 088
- EP-A- 0 359 482
- DE-U- 9 001 180

## Beschreibung

Die vorliegende Erfindung betrifft eine Silageschneidzange nach dem Oberbegriff des Anspruches 1.

Eine solche Silageschneidzange ist beispielsweise aus der EP-A-0 359 482 bekannt. Die dort offenbarte Silageschneidzange umfaßt Zinken und einen Block-Schermechanismus mit rostfreien Stahlschneiden. Die Silageschneidzange wird auf einen landwirtschaftlichen Traktor aufgebaut, von ihm angetrieben und schneidet einen Silageblock aus einer Miete oder dergleichen. Der Silageblock wird von der Vorrichtung in einen Behälter befördert, wo er durch eine zahnbesetzte Walze aufgerissen und in eine von Tieren gut aufnehmbare Form gebracht wird.

Es sind aus dem praktischen Betrieb auch Silageschneidzangen ohne eine derartige Zerkleinerungsvorrichtung bekannt, mit denen durch den Traktor die Silageschneidzange mit geöffnetem Oberteil in die Miete oder dergleichen gestoßen wird, wobei die Zinken in das Silagegut eindringen. Durch Schließen des Oberteils wird sodann ein Silageblock herausgeschnitten, wobei die Schnittkanten an der verbleibenden Silage relativ glatt sind. Diese glatten Kanten sind erwünscht, um eine stoffliche Veränderung unter Einfluß von durch eine aufgerissene und dadurch vergrößerte Silageoberfläche eindringender Luft einzuschränken.

Nachteilig ist bei den bekannten Silageschneidzangen, daß der untere Teil der Zange aus einem Zinkenrost besteht, der nur für relativ langfaseriges Material, insbesondere Grassilage, geeignet ist. Feinkörnigeres Material, z.B. Silage aus gehäckseltem Mais oder Biertreber, können hiermit nicht transportiert werden, da dieses Material zwischen den Zinken nach unten fallen würde. Da viele landwirtschaftliche Betriebe Mischfutter verwenden, welches aus verschiedenen der genannten Futterarten zusammengemischt wird, ist es deshalb erforderlich, an den Traktor abwechselnd die Silageschneidzange der bekannten Bauart oder eine Ladeschaufel anzubauen, je nach dem, welche Futterart gerade transportiert werden soll.

Der Erfindung liegt deswegen die Aufgabe zugrunde, eine Silageschneidzange zu schaffen, mit der sowohl langfaseriges Material als auch feinkörniges Material ausschneidbar und transportierbar ist.

Die Lösung der Aufgabe erfolgt durch eine gattungsgemäße Silageschneidzange mit den kennzeichnenden Merkmalen des Anspruches 1.

Dadurch, daß eine Platte vorgesehen ist, die um eine horizontal in der Nähe der Befestigungsenden der Zinken angeordnete Achse zwischen einer etwa horizontalen und einer etwa vertikalen Stellung verschwenkbar ist, wird erreicht, daß bei vertikaler Stellung der Platte in gewohnter Weise langfaseriges Material aufgenommen und befördert werden kann, wobei die hochgeklappte Platte an der Rückwand anliegt und die Funktion der Silageschneidzange nicht behindert, während in der horizontalen Stellung der Platte ohne Probleme feinkörniges Gut wie mit einer Schaufel aufgenommen werden kann, wobei die Platte etwa die Ausmaße des durch die Zinken gebildeten Rostes aufweist und auf diesem aufliegt.

Vorteilhaft ist vorgesehen, daß die Platte durch mindestens eine Kolben-Zylinder-Einheit verschwenkbar ist, deren eines Ende an einer zwischen den Seitenwänden verlaufenden Strebe befestigt ist und deren anderes Ende mit einem am hinteren Bereich der Platte befestigten Hebel in Eingriff steht. Dadurch ist ein fernbetätigtes Verschwenken der Platte durch die Bedienungsperson des Traktors möglich, ohne daß diese ihre Position verlassen muß. Als Fluid für die Betätigung der Kolben-Zylinder-Einheit wird zweckmäßig das Hydraulikmedium verwendet, welches üblicherweise an landwirtschaftlichen Traktoren in deren Hydraulikeinrichtungen vorhanden ist. Somit ist ein Anbau der Silageschneidzange an vorhandene Traktoren leicht möglich.

Zur Erzielung eines gleichmäßigen Kraftangriffs, insbesondere bei größeren Platten, ist es zweckmäßig, daß an jeder der beiden Seitenwände eine Kolben-Zylinder-Einheit vorgesehen ist.

Es ist vorteilhaft, daß an der vorderen Kante der Platte Zähne angeordnet sind, um ein leichteres Eindringen in kleinteilige Silage oder anderes Schüttgut zu ermöglichen. Außerdem können die Zähne gegenüber der Plattenebene etwas nach unten abgewinkelt sein, um die Aufnahme von Ladegut von einer Bodenfläche zu erleichtern und zu verbessern.

Zweckmäßig ist vorgesehen, daß die Platte an den Seitenkanten etwa rechtwinklig zur Plattenebene nach oben ragende Seitenteile aufweist, um ein seitliches Herabfallen von feinkörnigem Ladegut zu verhindern.

Mit der erfindungsgemäßen Silageschneidzange können also sowohl langfaserige Silage als auch feinkörniges, loses und schüttfähiges Futter und anderes Schüttgut, wie Getreide, Sand usw. transportiert werden. Dies erspart eine Traktorumrüstung, wie sie vorher erforderlich war. Vorzugsweise wird die Silageschneidzange an den Frontladearmen eines Traktors angebaut; eine Anbringung an der Dreipunktkupplung an der Rückseite eines Traktors ist auch möglich.

Ein Ausführungsbeispiel der erfindungsgemäßen Silageschneidzange wird nun anhand einer Zeichnung näher erläutert. Die Zeichnung zeigt in
- Figur 1: eine Seitenansicht einer Silageschneidzange mit einer Platte in etwa horizontaler Stellung, in
- Figur 2: eine Seitenansicht der Silageschneidzange mit der Platte in einer Zwischenstellung, in
- Figur 3: eine Seitenansicht der Silageschneidzange mit der Platte in etwa vertikaler Stellung und in
- Figur 4: eine Draufsicht auf die Silageschneidzange mit der Platte in horizontaler Stellung.

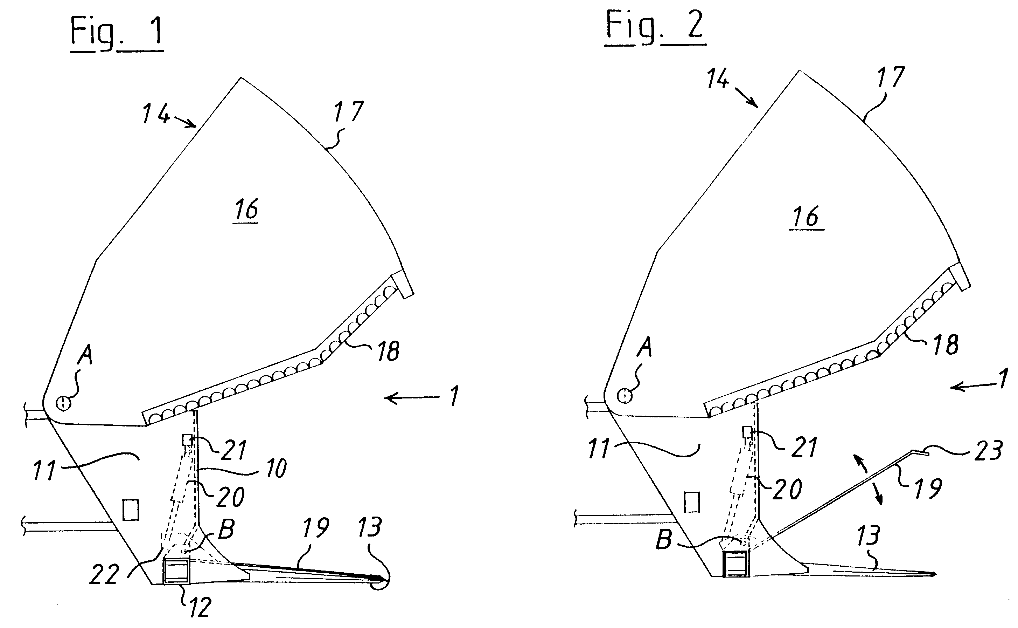

Mit Bezugnahme auf die Figuren 1, 2 und 3 weist eine Silageschneidzange 1 eine Rückwand 10 und zwei damit verbundene Seitenwände 11 auf. Zwischen den unteren Bereichen der Seitenwände 11 erstreckt sich eine erste Querstrebe 12, an der Zinken 13 und die Rückwand 10 befestigt sind.

Im oberen Bereich der Seitenwände 11 ist eine horizontale Achse A angeordnet, um die ein Oberteil 14 schwenkbar ist. Das Oberteil 14 umfaßt zwei Seitenteile 16 und ein Vorderteil 17, wobei die unteren Kanten der Seitenteile 16 und des Vorderteils 17 Schneidmesser 18 aufweisen.

Weiterhin weist die Silageschneidzange 1 eine um eine horizontale Achse B verschwenkbare Platte 19 auf, die in drei Stellungen in den Figuren 1 bis 3 dargestellt ist.

In Figur 1 ist die Platte 19 in etwa horizontaler Stellung dargestellt und liegt auf den Zinken 13 auf. In dieser Stellung der Platte 19 kann feinkörniges Gut aufgenommen und transportiert werden.

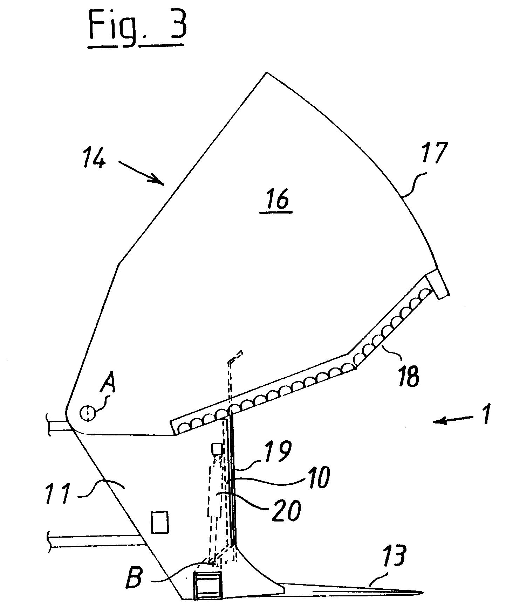

Mit Hilfe einer Kolben-Zylinder-Einheit 20 ist die Platte 19 von ihrer horizontalen Stellung gemäß Figur 1 kontinuierlich über eine in Figur 2 dargestellte Zwischenstellung in eine etwa vertikale Stellung gemäß Figur 3 schwenkbar, wobei die Platte 19 in der etwa vertikalen Stellung an der Rückwand 10 anliegt.

Die Kolben-Zylinder-Einheit 20, deren hydraulischer Antrieb nicht dargestellt ist, ist mit ihrem einen Ende an einer weiteren Strebe 21 schwenkbar befestigt, wobei die Strebe 21 etwa horizontal zwischen den Seitenwänden 11 verläuft.

Das andere Ende der Kolben-Zylinder-Einheit 20 greift an einem Hebel 22 an, der am hinteren Bereich der Platte 19 derart befestigt ist, daß diese beim Verstellen der Kolben-Zylinder-Einheit 20 um eine Achse B verschwenkt wird.

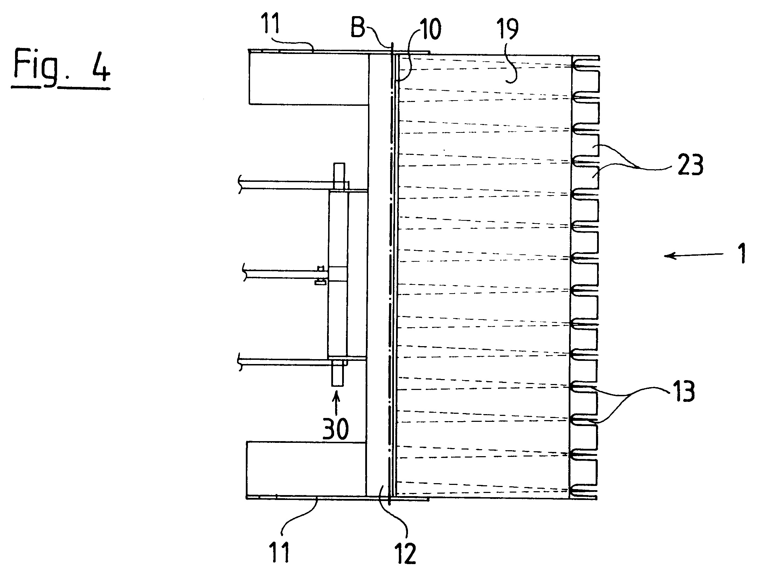

Figur 4 zeigt die Silageschneidzange 10 in Draufsicht, hier ohne Oberteil 14, wobei von oben die Platte 19 mit Zähnen 23 an der vorderen Kante sichtbar ist.

Die Zähne 23 sind so angeordnet, daß in den Zahnlücken die Spitzen der Zinken 13 liegen. Außerdem sind die Zähne 23 gegenüber der Plattenebene etwas nach unten abgewinkelt, damit die Spitzen der Zähne bei der Aufnahme von feinteiligem Gut entlang einer Bodenfläche unter das Gut geführt werden können.

Mit den Verbindungsmitteln 30 ist die Silageschneidzange 1 mit den Frontladearmen oder der Heck-Dreipunktkupplung eines Traktors verbindbar und von diesem aus betätigbar.

## Patentansprüche

1. Silageschneidzange, vorzugsweise zur Anbringung an einem Fahrzeug, mit einer Rückwand (10) und zwei damit verbundenen Seitenwänden (11), wobei im unteren Bereich der Rückwand (10) eine vielzahl von sich etwa horizontal erstreckenden, einen Zinkenrost bildenden Zinken (13) befestigt ist, wobei an den Seitenwänden (11) ein um eine horizontale Achse A schwenkbares Oberteil (14) angebracht ist, wobei das Oberteil (14) zwei Seitenwände (16) und ein mit den Seitenteilen (16) verbundenes Vorderteil (17) aufweist, wobei die unteren Kanten der Seitenteile (16) und des Vorderteils (17) Schneidmesser (18) aufweisen, wobei das Oberteil (14) durch eine Betätigungseinrichtung zwischen einer Offen-Stellung und einer Geschlossen-Stellung schwenkbar ist und wobei in der Geschlossen-Stellung die Schneidmesser (18) nahe den Zinken (13) liegen,
dadurch gekennzeichnet,
daß eine Platte (19) vorgesehen ist, die um eine horizontal in der Nähe der Befestigungsenden der Zinken (13) angeordnete Achse B zwischen einer etwa horizontalen Stellung, in der sie auf den Zinken (13) aufliegt, und einer etwa vertikalen Stellung, in der sie an der Rückwand (10) anliegt, verschwenkbar ist, wobei die Platte (19) die Ausmaße des Zinkenrostes aufweist.

2. Silageschneidzange nach Anspruch 1, dadurch gekennzeichnet, daß die Platte (19) durch mindestens eine Kolben-Zylinder-Einheit (20) verschwenkbar ist, deren eines Ende an einer zwischen den Seitenwänden (11) verlaufenden Strebe (21) befestigt ist und deren anderes Ende mit einem am hinteren Bereich der Platte (19) befestigten Hebel (22) in Eingriff steht.

3. Silageschneidzange nach einem der vorhergehenden Ansprüche, dadurch gekennzeichnet, daß an der vorderen Kante der Platte (19) Zähne (23) angebracht sind.

4. Silageschneidzange nach Anspruch 3, dadurch gekennzeichnet, daß die Zähne (23) gegenüber der Plattenebene nach unten abgewinkelt sind, wobei der Winkel zwischen 15 und 45° beträgt.

5. Silageschneidzange nach einem der vorhergehenden Ansprüche, dadurch gekennzeichnet, daS die Platte (19) an den Seitenkanten etwa rechtwinklig zur Plattenebene nach oben ragende Seitenteile aufweist.

## Claims

1. Silage cutter, preferably to be mounted at a vehicle, comprising a rear wall (10), and two side walls (11) connected therewith wherein in the lower area of the rear wall (10) a plurality of approximately horizontally extending tines (13) is secured forming a tine grid wherein at the side walls (11) an upper member (14) is fastened to be swivelled about a horizontal axis A, wherein the upper member (14) comprises two side walls (16), and a front member (17) connected with the side walls (16) wherein the lower edges of the side walls (16) and the front member (17) comprise cutting blades (18) wherein the upper member (14) is privotable between an open-position and a closed-position by means of an actuating device, and wherein in the closed-position the cutting blades (18) are positioned close to the tines (13),
**characterized in**
that a plate (19) is provided which is pivotable about a horizontal axis B arranged adjacent to the fastened ends of the tines (13) with the plate (19) to be swivelled between an approxmately horizontal position wherein it rests on the tines (13), and an approximately vertical position wherein it abuts at the rear wall (10) wherein the plate (19) comprises the dimensions of the tine grid.

2. Silage cutter according to claim 1, characterized in that the plate (19) is pivotable by at least one piston/cylinder unit (20) with the one end thereof secured at a web (21) extending between the side walls (11), and the other end thereof engaged with a lever (22) secured at the rear area of the plate (19).

3. Silage cutter according to one of the preceeding claims, characterized in that teeth (23) are attached at the front edge of the plate (19).

4. Silage cutter according to claim 3, characterized in that the teeth (23) are angled downwards in relation to the plane of the plate with the angle being between 15 and 45°.

5. Silage cutter according to one of the preceeding claims, characterized in that the plate (19) at the side edges thereof comprises side members protruding upwards approximately rectangularly in relation to the plane of the plate.

## Revendications

1. Pince coupante pour ensilage, de préférence destinée à être montée sur un véhicule, et présentant une paroi arrière (10) et deux parois latérales (11) reliées à cette paroi arrière, une pluralité de pointes (13) s'étendant de façon sensiblement horizontale et constituant une grille à dents étant fixée dans la zone intérieure de la paroi arrière (10), tandis qu'une partie supérieure (14) est montée pivotante autour d'un axe horizontal (A) sur les parois latérales (11), cette partie supérieure (14) comprenant deux parois latérales (16) et une partie avant (17) reliée aux parties latérales (16), pince coupante dans laquelle les arêtes inférieures des parties latérales (16) et de la partie avant (17) comprennent des couteaux (18) tandis que la partie supérieure (14) est susceptible d'être entraînée à pivotement par un organe d'actionnement entre une position ouverte et une position fermée, les couteaux (18) étant disposés en position fermée à proximité des pointes (13), caractérisée en ce qu'il est prévu une plaque (19) qui est susceptible de pivoter autour d'un axe (B) disposé horizontalement à proximité des extrémités de fixation des pointes (13), entre une position sensiblement horizontale dans laquelle elle est disposée sur les dents (13) et une position sensiblement verticale, dans laquelle elle est disposée contre la paroi arrière (10), la plaque (19) présentant les dimensions de la grille à dents.

2. Pince coupante pour ensilage selon la revendication 1, caractérisée en ce que la plaque (19) est susceptible d'être entraînée en pivotement par au moins une unité piston-cylindre (20), dont l'une des extrémités est fixée à une entretoise (21) s'étendant entre les parois latérales (11) et dont l'autre extrémité est en contact avec un levier (22) fixé dans la zone arrière de la plaque (19).

3. Pince coupante pour ensilage selon l'une des revendications précédentes, caractérisée en ce que, sur l'arête avant de la plaque (19), sont montées des dents (23).

4. Pince coupante pour ensilage selon la revendication 3, caractérisée en ce que les dents (23) sont repliées vers le bas par rapport au plan de la plaque , sous un angle compris entre 15° et 45°.

5. Pince coupante pour ensilage selon l'une des revendications précédentes, caractérisée en ce que la plaque (19) comporte sur les arêtes latérales des parties latérales faisant saillie vers le haut, sensiblement à angle droit par rapport au plan de la plaque.
